# EUROPÄISCHE PATENTSCHRIFT

(11) **EP 2 941 406 B1**
(45) Veröffentlichungstag und Bekanntmachung des Hinweises auf die Patenterteilung: **27.06.2018**
(21) Anmeldenummer: 13811172.9
(22) Anmeldetag: 16.12.2013
(51) Int. Cl.: C04B 28/02, C08F 290/06, C04B 24/26, C04B 28/14, C04B 103/00, C04B 103/40

(54) **VERFLÜSSIGER MIT KATIONISCHEN SEITENKETTEN**
LIQUIDISER WITH CATIONIC SIDE CHAINS
DISPOSITIF DE LIQUÉFACTION AVEC CHAÎNES LATÉRALES CATIONIQUES

(30) Priorität: 07.01.2013 EP 13150423
(43) Veröffentlichungstag der Anmeldung: 11.11.2015
(73) Patentinhaber: Sika Technology AG, 6340 Baar (CH)
(72) Erfinder: HAMPEL, Christina, CH-5406 Rütihof (CH); ZIMMERMANN, Jörg, CH-8400 Winterthur (CH); AL SHEMARI, Jabbar, CH-8052 Zürich (CH); FRIEDERICH, Markus, CH-8952 Schlieren (CH)
(74) Vertreter: Sika Patent Attorneys
(86) Internationale Anmeldenummer: PCT/EP2013/076715
(87) Internationale Veröffentlichungsnummer: WO 2014/106572

(56) Entgegenhaltungen:
- EP-A1- 1 795 511
- EP-A1- 2 325 231
- EP-A1- 2 463 317
- US-A- 4 814 014
- US-A1- 2010 168 282

## Beschreibung

Die Erfindung betrifft neue Kammpolymere mit kationischen Seitenketten und strukturellen Untereinheiten, die Polyetherbausteine aufweisen. Die Erfindung betrifft auch hydraulisch abbindbare Zementzusammensetzungen, Formkörper, Verwendungen und Verfahren zur Herstellung von Kammpolymeren.

### Stand der Technik

In der Bautechnologie werden bei der Verarbeitung von hydraulisch abbindbaren Zusammensetzungen, wie Zementen und Gips, Dispergiermittel zugegeben, die insbesondere als Verflüssiger wirken. Durch den Zusatz solcher Verflüssiger kann der Wasseranteil herabgesetzt werden, wodurch die Verarbeitbarkeit der pastösen Zusammensetzungen verbessert und die Stabilität der ausgehärteten Produkte erhöht wird. Eine wichtige Gruppe solcher Dispergiermittel sind Kammpolymere aus Polycarbonsäuren mit Polyalkylenglykol-Seitenketten (Polycaboxylatether, PCE). Sie werden als Kammpolymere bezeichnet, weil sie ein einziges Basispolymer ("Backbone") aufweisen, an das eine Vielzahl von Seitenketten kovalent gebunden ist, so dass die Molekülstruktur insgesamt einem Kamm ähnelt. Es gibt eine Vielzahl solcher Kammpolymere, die neben Estergruppen und freien Carboxygruppen auch Amidgruppen aufweisen können.

Gips ist ein wichtiger Baustoff, der für eine Vielzahl von Anwendungen eingesetzt wird. Aushärtbare Gipszusammensetzungen werden beispielsweise zur Herstellung von Gipsplatten, als Spachtelmassen, Wandputze oder zur Herstellung von Estrichen eingesetzt. Bei der Verarbeitung von Gips besteht ein Bedürfnis, den Wassergehalt zu verringern. Dadurch wird der abgebundene Gips weniger porös und somit stabiler. Bei geringerem Wassergehalt ist zudem ein kürzerer Trockenvorgang ausreichend, wodurch die Verarbeitung beschleunigt wird und Energie eingespart werden kann.

Hydraulisch abbindbare Bindemittel aus natürlichen Lagerstätten, wie Gips, weisen häufig einen Gehalt an Ton auf. Übliche Kammpolymere sind jedoch als Dispergiermittel nicht oder nur eingeschränkt wirksam, wenn eine hydraulisch abbindbare Zusammensetzung Ton enthält. Kammpolymere interagieren in tonhaltigen Gipszusammensetzungen in unerwünschter Weise mit Ton-Partikeln und können daher nicht den gewünschten Effekt erzielen.

Zur Lösung des Problems wird im Stand der Technik vorgeschlagen, Zusatzmittel hinzuzufügen, welche die negativen Wirkungen von Ton aufheben, oder die speziell in tonhaltigen Zusammensetzungen eine dispergierende und verflüssigende Wirkung erzielen.

Das Patent US 7,261,772 B1 beschreibt eine Gipszusammensetzung, die neben Wasser, Gips und Ton zusätzlich Polyoxyalkylene, eine Aminverbindung und ein Kammpolymer enthält. Der Einsatz flüchtiger Amine ist jedoch nachteilig, da diese zu unangenehmen Gerüchen führen und bei der Verarbeitung und Freisetzung aus ausgehärteten Produkten gesundheitsschädlich sind. Bei vielen Anwendungen, insbesondere Gipsplatten, sind diese Nachteile für Anwender nicht akzeptabel.

Die WO 98/58887 schlägt vor, tonhaltigen Zementzusammensetzungen zusätzliche Additive, nämlich Polyether auf der Basis von Ethylenoxid und Propylenoxid, und niedermolekulare kationische Verbindungen zuzusetzen. Nachteilig ist die vergleichsweise geringe Wirksamkeit der Zusätze und der hohe Anteil an niedermolekularen Substanzen, welche selbst nicht als Verflüssiger wirken, aber die Stabilität des ausgehärteten Produkts verringern.

Die US 2007/0287794 A1 offenbart, tonhaltigen Gipszusammensetzungen kationische Polymere zuzufügen. Die Polymere sind Kondensate aus primären und sekundären Aminen mit geeigneten Reaktionspartnern, wie Epichlorhydrin. Die Reaktionsprodukte sind dabei lineare Polymere, welche kationische Ladungen auf der Polymerhauptkette tragen. Nachteilig dabei ist, dass bei der Herstellung der Kondensate Verbindungen zum Einsatz kommen, die chemisch nicht gut handhabbar und teilweise gesundheitsschädlich sind, wie Amine, Epoxide und Cyanidverbindungen.

Die EP 2 463 317 A1 schlägt vor, tonhaltigen Gipszusammensetzungen verflüssigende Polycarboxylatether zuzusetzen, welche zusätzlich Seitenketten mit kationischen Gruppen aufweisen. Problematisch ist allerdings, dass die Kammpolymere relativ komplex sind. Die Ausführungsbeispiele der EP 2 463 317 A1 zeigen, dass die kationischen Polymere die Fließfähigkeit von Gipszusammensetzungen verbessern können. Allerdings bleibt die Versteifungszeit nahezu unverändert.

Die WO2008/049549 offenbart kationische Polycarboxylatether, die zudem über Estergruppen verknüpfte Polyalkylenglykolseitenketten aufweisen. Die Ausführungsbeispiele der WO2008/049549 zeigen jedoch, dass die kationischen Polymere die Fließfähigkeit gegenüber Vergleichsversuchen nicht oder nur geringfügig beeinflussen.

Die US 2012/0231991 A1 offenbart Kammpolymere als Zusätze für Reinigungsmittel auf der Basis amphoterer Polycarboxylate. Die Kammpolymere enthalten an den Seitenketten kationische Gruppen, die mit der Hauptkette über Polyethergruppen verbunden sind.

Die EP 2 325 231 A1 betrifft Kammpolymere als Zusätze für Zementzusammensetzungen, die insbesondere Thiolgruppen aufweisen. Die Kammpolymere enthalten Polyalkylenglykolseitenketten, die über Ethergruppen an die Hauptkette gebunden sein können (Abschnitt [0055], Formel 5). Zusätzlich können zur Herstellung der Kammpolymere übliche Monomere eingesetzt, die anionische Gruppen, nämlich Carboxygruppen, aufweisen [Abschnitt [0051]). Im Gegensatz zur Erfindung der vorliegenden Anmeldung werden zur Herstellung der Kammpolymere keine Monomere eingesetzt, die kationische Gruppen aufweisen. In Abschnitt [0051] wird diesbezüglich nur offenbart, dass das anionische Monomer ein Gegenion aufweisen kann, das ein Kation ist, wie ein Metallion oder Ammoniumion.

Die US2010/0168282 A1 betrifft Kammpolymere, die kationische Seitenketten aufweisen. Die Kammpolymere werden unter Verwendung von Monomeren hergestellt, bei denen eine Polyalkylenglykolseitenkette über eine Estergruppe mit der Hauptkette verbunden ist (Anspruch 1, Abschnitt [0034]). Die Kammpolymere der vorliegenden Anmeldung unterscheiden sich strukturell davon, weil sie Polyalkylenglykolseitenketten aufweisen, die nicht mit Estergruppen an die Hauptkette verknüpft sind.

Insgesamt wäre es wünschenswert, weitere Dispergiermittel bereitzustellen, die insbesondere in Ton-haltigen Zusammensetzungen effizient, variabel und auf einfache Weise einsetzbar sind.

### Aufgabe der Erfindung

Der Erfindung liegt die Aufgabe zugrunde, die oben beschriebenen Nachteile zu überwinden. Der Erfindung liegt daher das Problem zugrunde, ein einfaches, variables und effizientes Verfahren zur Dispergierung und Verflüssigung von hydraulisch abbindbaren Zusammensetzungen und insbesondere von Gipszusammensetzungen zur Verfügung zu stellen. Insbesondere sollen effiziente Dispergiermittel für tonhaltige Zusammensetzungen bereitgestellt werden.

Die Dispergiermittel sollen eine hohe Verflüssigung bewirken. Sie sollen auch über einen langen Zeitraum wirksam sein und die Versteifung von hydraulisch abbindenden Zusammensetzungen verzögern. Zudem sollen Dispergiermittel bereitgestellt werden, die es ermöglichen, die Wirkung von üblichen Polycarboxylatethern zu verbessern.

Bevorzugt sollen auch die Eigenschaften und vor allem die Stabilität der ausgehärteten Produkte verbessert werden. Insbesondere soll durch die Verringerung des Wassergehalts eine Verbesserung der Festigkeit erreicht werden.

### Offenbarung der Erfindung

Überraschenderweise wird die der Erfindung zugrunde liegende Aufgabe gelöst durch Kammpolymere, Zusammensetzungen, Formkörper, Verfahren und Verwendungen gemäß den Patentansprüchen. Weitere vorteilhafte Ausführungsformen werden in der Beschreibung offenbart.

Gegenstand der Erfindung ist Kammpolymer, erhältlich durch Polymerisieren eines Monomerengemischs, das mindestens ein Monomer enthält, das mindestens eine kovalent an das Monomer gebundene kationische Gruppe aufweist, und das mindestens ein Monomer der Formel

R¹-O-[AO]ₙ-R²

enthält, wobei
R¹ eine Alkenylgruppe ist,
R² für H, eine Alkylgruppe mit 1 bis 20 C-Atomen, oder eine Arylgruppe oder Alkylarylgruppe mit 7 bis 20 C-Atomen steht,
A unabhängig voneinander für eine C₂- bis C₆-Alkylengruppe steht, insbesondere Ethylen oder Propylen, wobei A nicht eine unverzweigte Alkylengruppe mit 4 oder mehr C-Atomen ist,
und n ein Wert von 2 bis 300 ist.

Die erfindungsgemäßen Kammpolymere werden nachfolgend auch als "kationische Kammpolymere" bezeichnet. Das kationische Kammpolymer weist kationische Gruppen auf und kann zusätzliche anionische Gruppen aufweisen. Das kationische Polymer kann daher ein zwitterionisches Polymer sein. Erfindungsgemäß steht der Begriff "Kammpolymer" für das Kammpolymer oder ein Salz davon. So kann ein kationisches Kammpolymer in Form von Salzen mit geeigneten Anionen vorliegen. Das Kammpolymer ist bevorzugt ein Halogenid, insbesondere ein Chlorid. Es kann aber auch als Sulfat, Carbonat, Acetat oder als sonstiges übliches Salz vorliegen. Sofern das Kammpolymer ein Zwitterion ist, kann es als Salz mit geeigneten anionischen oder kationischen Gruppen vorliegen. Das Kammpolymer kann auch als inneres Salz vorliegen, bei dem sich die eigenen kationischen und anionischen Ladungen neutralisieren. Sofern Säuregruppen, wie Carboxygruppen, enthalten sind, können diese teilweise oder vollständig neutralisiert sein.

Erfindungsgemäß weist das kationische Kammpolymer an einem Teil der Seitenketten mindestens eine kationische Gruppe auf, und dabei bevorzugt eine einzige kationische Gruppe pro Seitenkette. Dabei weisen nicht alle Seitenketten in einem Polymer kationische Gruppen auf. Die kationische Gruppe ist mit dem Kammpolymer kovalent verbunden. Sie kann eine übliche kationische Gruppe sein, die an organische Polymere angehängt werden kann, insbesondere eine Ammonium-, Sulfonium- oder Phosphoniumgruppe.

In einer bevorzugten Ausführungsform der Erfindung ist die kationische Gruppe eine Ammoniumgruppe. Besonders bevorzugt ist eine quartäre Ammoniumgruppe. Dabei ist ein positiv geladenes Stickstoffatom mit vier organischen Resten substituiert. Bevorzugt weist die kationische Gruppe die Formel -N⁺R¹⁰R¹¹R¹² auf, wobei R¹⁰, R¹¹ und R¹² unabhängig voneinander H, ein aliphatischer Kohlenwasserstoffrest mit 1 bis 20 C-Atomen, ein cycloaliphatischer Kohlenwasserstoffrest mit 5 bis 8 C-Atomen und/oder ein Arylrest mit 6 bis 14 C-Atomen ist. Bevorzugt ist R¹⁰, R¹¹ und R¹² nicht H, besonders bevorzugt ausgewählt aus Methyl und Ethyl.

In einer bevorzugten Ausführungsform der Erfindung ist die kationische Gruppe Bestandteil einer monomeren Struktureinheit, die ausgewählt ist aus [2-(Acryloyloxy)-ethyl]-trimethyl-ammoniumchlorid, [2-(Acryloylamino)-ethyl]-trimethyl-ammoniumchlorid, [2-(Acryloyloxy)-ethyl]-trimethyl-ammoniummethosulfat, [2-(Methacryloyloxy)-ethyl]-trimethylammoniumchlorid bzw. -methosulfat, [3-(Acryloylamino)-propyl]-trimethylammoniumchlorid, [3-(Methacryloyl-amino)-propyl]-trimethylammoniumchlorid und Diallyldimethylammoniumchlorid (DADMAC).

Als besonders vorteilhaft hat sich erfindungsgemäß die Verwendung von [2-(Methacryloyloxy)-ethyl]-trimethylammonium-Salzen, insbesondere Chlorid, erwiesen. Die Verwendung ist kommerziell erhältlich von Evonik Industries, DE (unter der Markenbezeichnung "Visiomer TMAEMC") oder von Sigma-Aldrich, DE.

Die kationische Gruppe ist Bestandteil einer Seitenkette. Dies bedeutet, dass sie nicht Bestandteil der Hauptkette des Kammpolymers ist. Sie verbindet daher nicht Untereinheiten der Hauptkette miteinander. Sie unterscheidet sich dadurch beispielsweise von Kondensaten aus Dimethylamin und Epichlorhydrin aus US 2007/0287794 A1.

Das Monomer der Formel R¹-O-[AO]ₙ-R² weist bevorzugt einen Rest -[AO]ₙ-auf, der eine Polyethylenglykol- oder Polypropylenglykoluntereinheit ist. Dabei steht A für Ethylen der Formel -C₂H₄- oder für Propylen der Formel -CH(CH₃)-CH₂-. Sofern A drei oder mehr C-Atome aufweist, ist A bevorzugt verzweigt und weist die Struktur-CH(R')-CH₂- auf, wobei R' bevorzugt eine Alkylgruppe ist. In einer bevorzugten Ausführungsform ist der erste Rest A, der mit R¹-O-direkt verbunden ist, nicht unterschiedlich zu den übrigen Resten A, und insbesondere nicht ein "Linker", wie ein linearer Butylenrest. Bevorzugt ist die gesamte Gruppe -[AO]ₙ- ein Polymerisationsprodukt. Die Variable n ist bevorzugt einen Wert von 5 bis 200, insbesondere zwischen 10 und 150. Da die Gruppe -[AO]ₙ- üblicherweise durch Polymerisation hergestellt wird, bezeichnet n die mittlere Anzahl der Untereinheiten -[AO]-.

Bevorzugt weist der Rest R¹ eine einzige Doppelbindung auf. Bevorzugt ist R¹ eine Alkenylgruppe mit 1 bis 20, mehr bevorzugt mit 1 bis 6 C-Atomen. In bevorzugten Ausführungsformen ist der Rest R¹ ausgewählt aus Isoprenyl, Allyl, Isobutenyl oder Vinyl. Dabei weist der Rest R¹ bevorzugt die Struktur CH₂=CH-CH₂- oder CH₂=CH(CH₃)-CH₂-CH₂- auf.

R² ist bevorzugt H oder eine Alkylgruppe mit 1 bis 6 C-Atomen.

Das Monomer der Formel R¹-O-[AO]ₙ-R² ist in bevorzugten Ausführungsformen ein Isoprenylpolyethylenglykol, Allylpolyethylenglykol, Isobutenylpolyethylenglykol, Vinylpolyethylenglykol oder jeweils ein Ether davon, wobei der Rest R² bevorzugt H oder eine C₁ bis C₆ Alkylgruppe ist. Besonders bevorzug sind dabei (Isoprenylpolyethylenglykol)methylether, (Allylpolyethylenglykol)methylether, (Vinylpolyethylenglykol)methylether, (Isoprenylpolyethylenglykol)ethylether, (Allylpolyethylenglykol)ethylether und (Vinylpolyethylenglykol)ethylether.

In einer bevorzugten Ausführungsform weist das Kammpolymer Säuregruppen, insbesondere Carboxygruppen, auf. Das Kammpolymer ist dann ein zwitterionisches Kammpolymer. Bei dieser Ausführungsform sind die Säure- oder Carboxygruppen bevorzugt direkt an die Hauptkette gebunden. Eine solche Hauptkette wird erhalten, wenn bei der Herstellung durch Polymerisation als Monomere α-ungesättigte Carbonsäure-Untereinheiten, wie Acrylsäure, Methacrylsäure oder substituierte Derivate davon, eingesetzt werden. Solche Monomere sind übliche Struktureinheiten von Polycarboxylatethern. Die Carboxygruppen werden allgemein wegen der unmittelbaren Nähe zur Hauptkette dieser zugeordnet. Bevorzugt ist ein solches Kammpolymer durch Polymerisieren eines Monomerengemischs erhältlich, das eine ungesättigte Carboxysäure, insbesondere Acrylsäure und Methacrylsäure, enthält. In einer Ausführungsform der Erfindung ist die Hauptkette ein Copolymer, das als monomere Struktureinheiten Acrylsäure und Methacrylsäure enthält. Die Carboxygruppen und die Polycarbonsäure können als freie Säure oder als Salz vorliegen, wobei auch nur ein Teil der Säuregruppen als Salz vorliegen kann. Die Polycarbonsäure ist dann vollständig oder teilweise neutralisiert. Der Begriff "Salz" umfasst erfindungsgemäß neben den klassischen Salzen, die durch Neutralisation mit einer Base erhalten werden, auch komplexe Verbindungen mit Metallionen und den Carboxygruppen als Liganden.

In einer weiteren bevorzugten Ausführungsform sind zusätzlich monomere Struktureinheiten enthalten, die Ester oder Amide sind.

Bei der Herstellung solcher Polycarbonsäuren erfolgt die Einstellung der Kettenlänge regelmäßig mit einem Regler, beispielsweise Phosphit oder Sulfit. Daher können die erfindungsgemäßen Polycarbonsäuren Gruppen aufweisen, die keine Carbonsäureeinheiten sind, beispielsweise Phosphor- oder Schwefelhaltige Gruppen, wie Phospit- oder Sulfit-haltige Gruppen. Solche Gruppen sind häufig endständig an die Hauptkette angehängt und schließen diese ab.

In einer bevorzugten Ausführungsform der Erfindung umfasst das Kammpolymer:
a) mindestens eine Struktureinheit **A** (kationische Einheit), die bevorzugt die Formel (I) aufweist: 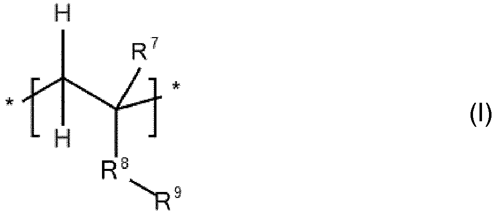 wobei
   R⁷ unabhängig voneinander für H oder CH₃ steht,
   R⁸ unabhängig voneinander für -CO-O-R'-, -NH-R'-, -CO-NH-R'-, -O-, R', -O-R'- oder -R'-O-R'- steht, wobei R' eine C₁ bis C₂₀ Alkylengruppe ist, die verzweigt oder unverzweigt sein kann, insbesondere eine Methylen-, Ethylen- oder Propylengruppe, und
   R⁹ unabhängig voneinander für eine kationische Gruppe steht;
   wobei gegebenenfalls ein entsprechendes Anion, wie Chlorid, enthalten ist,
b) mindestens einer Struktureinheit **B** (Ethereinheit) der Formel (II): 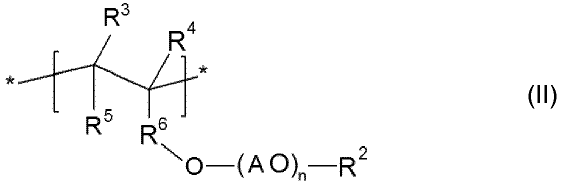 wobei
   R² für H, eine Alkylgruppe mit 1 bis 20 C-Atomen, oder eine Arylgruppe oder Alkylarylgruppe mit 7 bis 20 C-Atomen steht,
   A unabhängig voneinander für eine C₂- bis C₆-Alkylengruppe steht, wobei A nicht eine unverzweigte Alkylengruppe mit 4 oder mehr C-Atomen ist,
   R³, R⁴ und R⁵ unabhängig voneinander ausgewählt sind aus H und Alkylresten mit 1 bis 20 C-Atomen, die linear, verzweigt oder zyklisch sein können,
   R⁶ eine C₁ - C₆ Alkylengruppe ist, insbesondere Methylen,
   n unabhängig voneinander ein Wert zwischen 2 und 300 ist,
c) gegebenenfalls eine Struktureinheit C (Säureeinheit) der Formel (III): 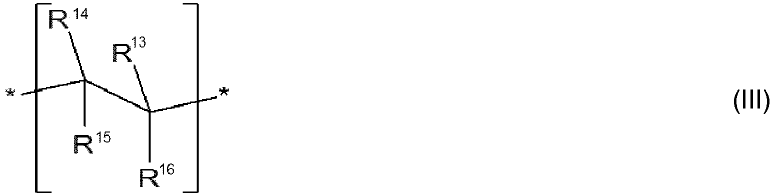
   wobei jedes R¹³, R¹⁴ und R¹⁵ unabhängig voneinander für H, -COOM, -CH₂COOM oder eine Alkylgruppe mit 1 bis 5 Kohlenstoffatomen steht,
   R¹⁶ unabhängig voneinander für -COOM, -CH₂COOM, -SO₂-OM, -O-PO(OM)₂ und/oder -PO(OM)₂ steht,
   oder wobei R¹⁵ mit R¹⁶ einen Ring bildet zu -CO-O-CO-,
   wobei M für H, ein Alkalimetall, ein Erdalkalimetall, Ammonium, ein Ammoniumkation, eine organische Ammoniumverbindung oder Mischungen davon steht;
   mit der Maßgabe, dass insgesamt ein einziger oder zwei der Reste R¹³, R¹⁴, R¹⁵ und R¹⁶ Säuregruppen sind,
wobei die Struktureinheit C bevorzugt eine Acrylsäureeinheit oder ein Salz davon und/oder eine Methacrylsäureeinheit oder ein Salz davon ist.

Das Kammpolymer kann in bevorzugten Ausführungsformen aus den Struktureinheiten **A** und **B** bestehen, oder aus den Struktureinheiten **A**, **B** und **C** bestehen. Sofern das Kammpolymer insgesamt eine Ladung aufweist, können entsprechende Gegenionen, also Anionen oder Kationen, enthalten sein.

Die Struktureinheit **A** wird in ein erfindungsgemäßes Polymer eingearbeitet, indem bei der Herstellung durch Polymerisation ein kationisches Monomer, wie weiter oben beschrieben, eingesetzt wird. Der Aufbau der Struktureinheit **B** entspricht daher den weiter oben beschriebenen Monomeren.

Die Struktureinheit **B** wird in ein erfindungsgemäßes Polymer eingearbeitet, indem bei der Herstellung durch Polymerisation ein Monomer der Formel R¹-O-[AO]ₙ-R² wie weiter oben beschrieben eingesetzt wird. Der Aufbau der Struktureinheit **B** entspricht daher den weiter oben beschriebenen Monomeren.

In einer bevorzugten Ausführungsform weist die mindestens eine Struktureinheit **B** die Formel (IIa) auf: 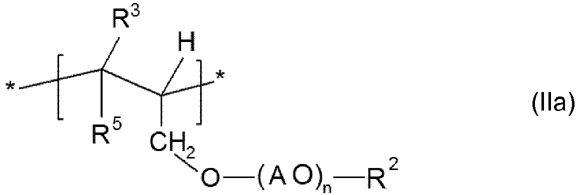 wobei
R² gleich H oder ein Alkylrest mit 1 bis 6 C-Atomen ist,
A unabhängig voneinander für eine Ethylen- oder Propylengruppe steht,
R³ und R⁵ unabhängig voneinander ausgewählt sind aus H und Alkylresten, die linear oder verzweigt sein können, die 1 bis 6 C-Atome aufweisen, und die insbesondere Methyl oder Ethyl sind, und
n unabhängig voneinander ein Wert zwischen 5 und 200 ist.

Die Struktureinheit **C** wird üblicherweise in das Polymer eingebracht, indem die Polymerisation in Gegenwart eines entsprechenden Säuremonomers oder eines Salzes oder Anhydrids davon durchgeführt wird. Als Säuremonomere sind dabei insbesondere α-ungesättigt Mono- oder Dicarbonsäuren geeignet, insbesondere Acrylsäure, Methacrylsäure, Maleinsäureanhydrid, Maleinsäure, Itaconsäure, Crotonsäure oder Fumarsäure.

Das kationische Kammpolymer kann zusätzlich mindestens eine weitere Struktureinheit **D** aufweisen, die von den Struktureinheiten **A, B** und **C** verschieden ist. Solche Struktureinheiten **D** können beliebig aus für Polycarboxylatether üblichen Struktureinheiten ausgewählt werden. Sie sollten möglichst die dispergierende und verflüssigende Wirkung des Kammpolymers nicht aufheben oder beeinträchtigen. Bevorzugt ist die Struktureinheit **D** ausgewählt sein aus einer Ester, Amid- oder Imideinheit, einer Säureeinheit, ausgewählt aus Carbonsäure, Sulfonsäure, Phosphonsäure, Phosphorsäureester, Carbonylamidomethylpropansulfonsäure und deren Salzen, oder einer Hydroxyethyloxycarbonyl-, Acetoxy-, Phenyl- oder N-Pyrrolidonylgruppe. Die Struktureinheit **D** kann insbesondere die Formel (IV) aufweisen: 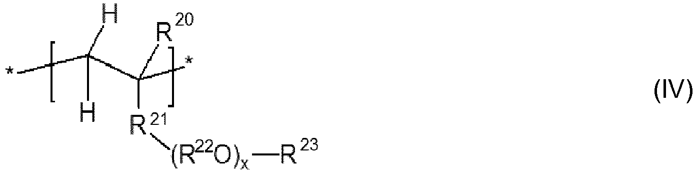 wobei
R²⁰ unabhängig voneinander für H oder CH₃ steht;
R²¹ unabhängig voneinander für ein Estergruppe -CO-O- oder für eine Amidgruppe -CO-NH- steht;
R²² unabhängig voneinander für eine C₂ - C₆ Alkylengruppe, insbesondere eine Ethylen- oder Propylengruppe steht,
R²³ unabhängig voneinander für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht, und
x unabhängig voneinander ein Wert zwischen 3 und 250, vorzugsweise zwischen 5 und 150 ist.

Geeignete Struktureinheiten **D** zur Einarbeitung in Kammpolymere sind im Stand der Technik bekannt. Sie werden beispielsweise in der EP 2 463 317 A1 beschrieben, auf die hier ausdrücklich Bezug genommen wird, insbesondere auf die Absätze [0022], [0023], [0026] und [0027].

Das Kammpolymer kann eine beliebige Kombination der verschiedenen Struktureinheiten **A** und **B** und gegebenenfalls **C** und/oder **D** aufweisen. Die Abfolge der einzelnen Struktureinheiten kann alternierend, statistisch oder blockweise sein.

In einer bevorzugten Ausführungsform weist das kationische Kammpolymer keine Polyalkylenglykoleinheiten auf, die über Estergruppen mit der Hauptkette verbunden sind. Bevorzugt weisen allenfalls die Struktureinheiten **A,** nicht jedoch die übrigen Struktureinheiten **B, C** und **D** Estergruppen auf.

In einer bevorzugten Ausführungsform der Erfindung umfasst das Kammpolymer mindestens 5 Mol-% oder mindestens 15 Mol-% Struktureinheiten **A** mit Seitenketten, die eine kationische Gruppe aufweisen, bezogen auf die Gesamtzahl aller monomerer Struktureinheiten der Hauptkette des Kammpolymers. In einer bevorzugten Ausführungsform der Erfindung umfasst das Kammpolymer 5 bis 95 Mol-%, bevorzugt 15 bis 85 Mol-% Struktureinheiten **A** mit Seitenketten, die mindestens eine kationische Gruppe aufweisen, und 5 bis 95 Mol-%, bevorzugt 15 bis 85 Mol-% Struktureinheiten **B,** bezogen auf die Gesamtzahl aller monomerer Struktureinheiten der Hauptkette des Kammpolymers.

In einer bevorzugten Ausführungsform der Erfindung beträgt die Summe der Struktureinheiten **A** mit Seitenketten, die mindestens eine kationische Gruppe aufweisen, und der Struktureinheiten **B** mindestens 10 Mol-%, bevorzugt mindestens 25 Mol-% oder mindestens 40 Mol-%, und in einer Ausführungsform 100 Mol-%, bezogen jeweils auf die Gesamtzahl aller monomerer Struktureinheiten der Hauptkette des Kammpolymers.

In einer bevorzugten Ausführungsform weist das Kammpolymer 5 bis 95 Mol-% Struktureinheiten **A,** 5 bis 95 Mol-% Struktureinheiten **B** und 0 bis 90 Mol-% Struktureinheiten **C** auf, jeweils bezogen auf die Gesamtzahl aller monomerer Struktureinheiten in der Hauptkette des Kammpolymers. Zusätzlich können 0 bis 50 Mol-% Struktureinheiten **D** enthalten sein. Die Summe der monomeren Struktureinheiten **A, B** und **C** ist dabei in einer bevorzugten Ausführungsform 100 Mol-%.

In einer besonders bevorzugten Ausführungsform weist das Kammpolymer 15 bis 40 Mol-% Struktureinheiten **A,** 15 bis 40 Mol-% Struktureinheiten **B** und 40 bis 80 Mol-% Struktureinheiten **C** auf, jeweils bezogen auf die Gesamtzahl aller monomerer Struktureinheiten in der Hauptkette des Kammpolymers. Für ein solches Polymer wurde ein besonders gutes Fließverhalten ermittelt. Zusätzlich können 0 bis 20 Mol-% Struktureinheiten **D** enthalten sein.

Das Kammpolymer weist vorzugsweise ein mittleres Molekulargewicht Mₙ von 400 bis 100.000 g/mol, vorzugsweise von 500 bis 70.000 g/mol oder von 750 bis 40.000 g/mol, besonders bevorzugt von 2.000 bis 70.000 oder von 5.000 bis 40.000 auf.

Das Kammpolymer weist Struktureinheiten **B** mit Polyethergruppen auf. Polyethergruppen werden durch Polymerisation von Alkoholen mit zwei oder mehr Hydroxygruppen, wie Ethylenglykol oder Propylenglykol, erhalten. Bevorzugt enthält das kationische Kammpolymer einen Polyethylenglykol- oder Polypropylenglykol-Baustein. Im Stand der Technik wird angenommen, dass solche Polyether-Seitenketten die Interaktion der Kammpolymere mit der wässrigen Umgebung verbessern. Sie dienen zur Hydrophilierung der Kammpolymere und tragen zur verflüssigenden Wirkung bei. Soweit in dieser Anmeldung Variablen n oder x für die Kettenlänge angegeben sind, bezeichnen diese die mittlere Anzahl der Untereinheiten.

Gegenstand der Erfindung ist auch eine hydraulisch abbindbare Zusammensetzung, enthaltend ein erfindungsgemäßes kationisches Kammpolymer und ein hydraulisch abbindbares Bindemittel. Unter dem Begriff "hydraulisch abbindbare Zusammensetzung" werden Zusammensetzungen verstanden, die hydraulisch abbindbare Bindemittel enthalten. Solche Bindemittel sind anorganische Materialien, die in Gegenwart von Wasser aushärten. Geeignete Bindemittel und Zusammensetzungen sind dem Fachmann im Bereich der Bauchemie bekannt. In einer bevorzugten Ausführungsform der Erfindung ist oder umfasst das hydraulisch abbindbare Bindemittel in der Zusammensetzung Gips oder Zement oder Kalk. Übliche Zemente sind beispielsweise Portlandzemente oder Tonerdeschmelzzemente und deren jeweilige Mischungen mit üblichen Zusätzen.

In einer bevorzugten Ausführungsform der Erfindung enthält die hydraulisch abbindbare Zusammensetzung Gips oder ist das (einzige) hydraulisch abbindbare Bindemittel Gips. Gips ist ein Synonym für Calciumsulfat. Dieses kann je nach Herstellungsverfahren in verschiedenen Modifikationen vorliegen, die sich durch den Gehalt an Kristallwasser und durch die kristalline Form unterscheiden. Technisch wird das Vermögen von Gips genutzt, dass durch Erhitzen (Brennen) teilweise oder vollständig entfernte Kristallwasser bei Zugabe von Wasser wieder aufzunehmen und dabei abzubinden. Da für die Verarbeitbarkeit mehr Wasser benötigt wird, als für das Abbinden notwendig ist, muss das Überschusswasser (bis zu 65%) wieder entfernt werden. Eine solche feuchte Gipszusammensetzung kann geformt werden. Der Gips kann Calciumsulfat in verschiedenen Kristallformen, beispielsweise als β-Halbhydrat, α-Halbhydrat, Anhydrit, oder als Gemisch davon enthalten. Der Gips kann Naturgips oder ein Produkt aus Rauchentschwefelungsanlagen (REA-Gips) sein.

In einer bevorzugten Ausführungsform der Erfindung enthält die hydraulisch abbindbare Zusammensetzung Ton. Tone sind Verwitterungsprodukte von Feldspaten. Sie bestehen nach dem Herauslösen der Alkali- und Erdalkalianteile aus dem verbliebenen Aluminiumsilikat. Übliche Formen von Ton sind Kaolinit Montmorillonit oder Bentonit. Der Tongehalt des hydraulisch abbindbaren Bindemittels, wie Gips oder Zement, kann beispielsweise zwischen 0,1 und 15 Gew.-%, insbesondere zwischen 0,2 und 10 Gew.-% oder zwischen 0,5 und 5 Gew.-% liegen. Besonders bevorzugt ist das Bindemittel ein tonhaltiger Gips. Naturgips kann, je nach Lagerstätte, einen Ton-Anteil enthalten.

Die erfindungsgemäße Gipszusammensetzung enthält bevorzugt mindestens 15 Gew.-%, bevorzugt mindestens 50 Gew.-%, noch mehr bevorzugt mindestens 70 Gew.-% oder mindestens 95 Gew.-% tonhaltigen Gips, bezogen auf das Gesamtgewicht. Die erfindungsgemäße tonhaltige Gipszusammensetzung kann wasserfrei sein oder weniger als 0,5, weniger als 1 oder weniger als 5 Gew.-% Wasser enthalten. Sie kann jedoch auch bereits bis zu 10, 20, 50 oder 80 Gew.-% Wasser enthalten. Der Anteil des kationischen Kammpolymers an einer erfindungsgemäßen tonhaltigen Gipszusammensetzung liegt in einer bevorzugten Ausführungsform zwischen 0,01 und 2 Gew.-%. insbesondere zwischen 0,05 und 1 Gew.-%.

Gegebenenfalls sind in der hydraulisch abbindbaren Zusammensetzung Zusatzstoffe enthalten. Geeignet sind übliche Zusatzstoffe, wie Flugaschen, Silica Fume, Schlacke, Hüttensanden und Kalksteinfüller, enthalten. Weiterhin sind beispielsweise Zuschlagstoffe wie Sand, Kies, Steine, Quarzmehl, Kreiden, oder Beschleuniger, Korrosionsinhibitoren, Verzögerer, Schwindreduzierer, Entschäumer oder Porenbildner einsetzbar.

Das kationische Kammpolymer wird vorzugsweise in einer Menge von 0,01 bis 5 Gew.-%, insbesondere 0,05 bis 2 Gew.-% oder 0,1 bis 1 Gew.-%, bezogen auf das Gewicht des hydraulisch abbindbaren Bindemittels, eingesetzt. Das Kammpolymer kann getrennt oder als Kammpolymer-haltige Zusammensetzung in fester oder flüssiger Form zugegeben werden. Das Kammpolymer wird bevorzugt in Form einer flüssigen Zusammensetzung eingesetzt, insbesondere als wässrige Lösung.

Das kationische Kammpolymer wird als Dispergiermittel und dabei insbesondere als Verflüssiger, als Wasserreduzierer, zur Verbesserung der Verarbeitbarkeit und/oder zur Verbesserung der Fliessfähigkeit der damit hergestellten hydraulisch abbindbaren Zusammensetzungen eingesetzt, sowie zur Verbesserung der Stabilität der ausgehärteten Produkte. Insbesondere können erfindungsgemäß hydraulisch abbindbare Zusammensetzungen mit verlängerter Verarbeitbarkeit erhalten werden. Das bedeutet, dass die Zusammensetzung nach Zugabe von Wasser und dem Kammpolymer noch über längere Zeit verarbeitbar ist, im Vergleich zu Zusammensetzungen, die das Kammpolymer nicht enthalten.

Erfindungsgemäß wird die Fließfähigkeit einer hydraulisch abbindbaren Zusammensetzung erhöht. Bevorzugt wird durch den Zusatz des kationischen Kammpolymers das Ausbreitmaß um mindestens 5%, insbesondere mehr als 10%, noch mehr bevorzugt um mehr als 15% oder mehr als 25% erhöht, jeweils verglichen mit einer identischen Zusammensetzung ohne kationischem Polymer. Das Ausbreitmaß wird dabei beispielsweise mit einer fließfähigen Probe mit 0,2 Gew.-% kationischem Kammpolymer (bezogen auf die Menge des hydraulisch abbindenden Bindemittels) ermittelt, insbesondere nach Mischen mit Wasser und 30 Sekunden intensivem Rühren in einem Minikonus von 50 mm, Füllhöhe 51 mm, nach 75 Sekunden. Das Ausbreitmaß kann dabei wie in den Ausführungsbeispielen beschrieben ermittelt werden. Es können auch Standardbedingungen gemäß DIN EN 132790-2 oder DIN EN 12350-5-Prüfung von Frischbeton - Teil 5: Ausbreitmaß verwendet werden.

Das kationische Kammpolymer kann als Dispergiermittel oder als Bestandteil eines Dispergiermittels in Verbindung mit weiteren Komponenten eingesetzt werden. Weitere Bestandteile können andere Verflüssiger, beispielsweise Polycarboxylatether (PCE), Lignosulfonate, sulfonierte Naphthalin-Formaldehyd-Kondensate oder sulfonierte Melamin-Formaldehyd-Kondensate sein; oder Beschleuniger, Verzögerer, Schwindreduzierer, Entschäumer, Luftporenbildner oder Schaumbildner. Typischerweise beträgt der Anteil des Kammpolymers 5 bis 100 Gew.-%, insbesondere 20 bis 100 Gew.-%, bezogen auf das Gesamtgewicht des Dispergiermittels.

Das kationische Kammpolymer oder eine Kammpolymer-haltige Zusammensetzung kann auch in festem Aggregatszustand eingesetzt werden, beispielsweise als Flocken, Pulver, Schuppen, Pellets, Granulate oder Platten. Solche festen Zusätze lassen sich gut transportieren und lagern. Das Kammpolymer kann im festen Aggregatszustand ein Bestandteil einer so genannten Trockenmischung, beispielsweise einer Zementzusammensetzung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.

Das kationische Kammpolymer kann einer hydraulisch abbindbaren Zusammensetzung mit oder kurz vor oder kurz nach der Zugabe des Wassers zugefügt werden. Als besonders geeignet hat sich hierbei die Zugabe des Kammpolymers in Form einer wässrigen Lösung oder Dispersion, insbesondere als Anmachwasser oder als Teil des Anmachwassers, herausgestellt. Die Herstellung der wässrigen Lösung erfolgt insbesondere durch nachträgliches Vermengen mit Wasser. Das kationische Kammpolymer kann einer hydraulisch abbindbaren Zusammensetzung jedoch auch vor oder während ihrem Mahlvorgang, beispielsweise dem Mahlprozess von Zementklinker zu Zement, zugegeben werden.

In einer Ausführungsform der Erfindung wird als Dispergiermittel das Reaktionsprodukt der Synthese des kationischen Kammpolymers eingesetzt, das nicht weiter aufgereinigt wurde. Wegen der hohen Konzentration und Stabilität der Kammpolymere in diesen wässrigen Zusammensetzungen ist eine Aufreinigung nicht unbedingt erforderlich. Vor der Verwendung können jedoch weitere Komponenten zugefügt werden. In einer weiteren Ausführungsform kann das Kammpolymer vor der Verwendung als Dispergiermittel gereinigt werden, beispielsweise durch Abtrennung weiterer Komponenten, beispielsweise durch Filtration.
In einer bevorzugten Ausführungsform der Erfindung enthält die hydraulisch abbindbare Zusammensetzung mindestens ein weiteres Dispergiermittel. Dabei wird bevorzugt ein weiteres Kammpolymer eingesetzt, das über Ester-, Amid- und/oder Ethergruppen an eine Hauptkette angebundene Seitenketten mit Polyethergruppen aufweist, wobei die Hauptketten Carboxygruppen aufweist. Solche Kammpolymere werden auch als Polycarboxylatether (PCE) bezeichnet. Das weitere Kammpolymer ist dabei von den erfindungsgemäßen kationischen Kammpolymeren verschieden. Bevorzugt weist der weitere Polycarboxylatether keine kationischen Gruppen auf. Erfindungsgemäß wurde gefunden, dass es besonders vorteilhaft ist, einen üblichen Polycarboxylatether ohne kationische Gruppen zusammen mit einem erfindungsgemäßen Kammpolymer mit kationischen Seitenketten einzusetzen. Das Mengenverhältnis von Polycarboxylatethern zu erfindungsgemäßen kationischen Kammpolymeren kann beispielsweise zwischen 1:10 und 10:1 liegen, insbesondere zwischen 1:2 und 2:1. Die Kombination eines erfindungsgemäßen kationischen Kammpolymers mit einem weiteren Polycarboxylatether ist in Ton-haltigen Gipszusammensetzungen besonders vorteilhaft. Ohne an eine Theorie gebunden zu sein, könnte dabei das kationische Kammpolymer die Tonpartikel neutralisieren und dadurch der nicht kationische Polycarboxylatether die bekannte verflüssigende Wirkung entfalten, ohne durch die Tonpartikel beeinträchtigt zu werden.

In einer weiteren Ausführungsform der Erfindung werden neben den erfindungsgemäßen kationischen Kammpolymeren kein weiteres Dispergiermittel und/oder kein weiteres Kammpolymer eingesetzt.

Gegenstand der Erfindung ist auch die Verwendung eines erfindungsgemäßen kationischen Kammpolymers als Dispergiermittel, insbesondere als Verflüssiger, für hydraulisch abbindbare Zusammensetzungen.

Gegenstand der Erfindung ist auch ein Verfahren zur Herstellung eines erfindungsgemäßen kationischen Kammpolymers, umfassend die Schritte:
(A) Bereitstellen eines Monomerengemischs, das mindestens ein Monomer enthält, das mindestens eine kationische Gruppe aufweist, und das mindestens ein Monomer der Formel

   R¹-O-[AO]ₙ-R²

   enthält, wobei
   R¹ eine Alkenylgruppe ist,
   R² für H, eine Alkylgruppe mit 1 bis 20 C-Atomen, oder eine Arylgruppe oder Alkylarylgruppe mit 7 bis 20 C-Atomen steht,
   A unabhängig voneinander für eine C₂- bis C₆-Alkylengruppe steht, wobei A nicht eine unverzweigte Alkylengruppe mit vier oder mehr C-Atomen ist,
   und n ein Wert von 2 bis 300 ist, und
(B) Polymerisieren des Monomerengemischs unter Erhalt des Kammpolymers.

Die Polymerisation erfolgt bevorzugt radikalisch. Die Herstellung von Kammpolymeren aus ungesättigten Monomeren durch radikalische Polymerisation ist im Stand der Technik an sich bekannt. Bei der Polymerisation werden geeignete Hilfsstoffe eingesetzt, wie Initiatoren und Regler.

Die erfindungsgemäßen Kammpolymere, Zusammensetzungen, Formkörper, Verwendungen und Verfahren lösen die Aufgabe, die der Erfindung zugrunde liegt. Erfindungsgemäß werden neue und effiziente Dispergiermittel und Verflüssiger für hydraulisch abbindbare Zusammensetzungen bereitgestellt.

Die kationischen Kammpolymere weisen nicht nur eine starke verflüssigende Wirkung auf, sondern verzögern auch signifikant das Abbinden und verlängern dadurch die Verarbeitbarkeit. Sie neutralisieren insbesondere die negativen Wirkungen von Ton in hydraulisch abbindbaren Zusammensetzungen. Mit den erfindungsgemäßen Kammpolymeren kann der Anwender auf einfache Weise die Eigenschaften von hydraulisch abbindbaren Zusammensetzungen einstellen und optimieren.

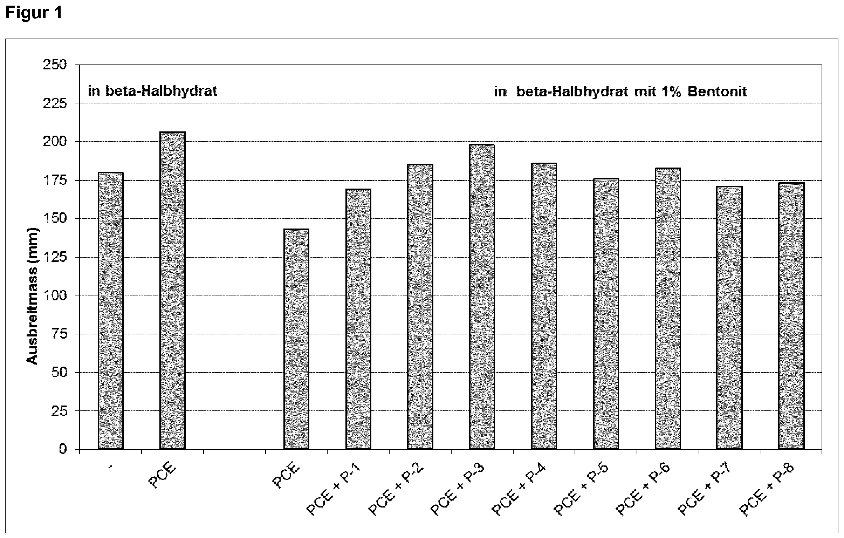

Figur 1 zeigt eine Übersicht der Ergebnisse der Ausführungsbeispiele 9 bis 19. Aufgetragen ist für jeden Versuch das Ausbreitmaß in mm wie in Tabelle 2 angegeben.

### Ausführungsbeispiele

### Beispiele 1 bis 8: Herstellung der Polymere

Das erfindungsgemässe Polymer P-1 wurde wie folgt hergestellt. In eine einem Reaktionsgefäss mit Rührer wurden 240.0 g T-PEG (Isoprenyl-PEG; Markenbezeichnung Oxab-501, Oxiranchem Inc, CN), 2.0 g einer 10%igen wässrigen Lösung von Fe(II)-SO₄*7H₂O und 2.0 g Natriumhypophosphit (als Regler) vorgelegt. Danach wurde bei einer Temperatur von 25 - 50°C über eine Zeit von 15 min unter Rühren 3.1 g einer 35%igen wässrigen Wasserstoffperoxidlösung, 27.7 g TMAEMC (75%ige Lösung in Wasser; Markenbezeichnung "Visiomer TMAEMC", Evonik Industries, DE), und 1.7 g einer 5%igen wässrigen Lösung des Initiators Natriumhydroxymethylsulfinat (Abkürzung NHMS; Markenbezeichnung "Rongalit", BASF, DE) durch separate Zuläufe zu getropft. Die Reaktionslösung wurde gekühlt, um einen Temperaturanstieg >50°C zu vermeiden und nach Reaktionsende 10 - 20 min nachgerührt, um Peroxid frei zu sein.

Die Polymere P-2 bis P-8 wurden in gleicher Weise wie Polymer P-1 entsprechend den in Tabelle 1 angegebenen Informationen hergestellt. Als Monomere wurden wie angegeben auch Allyl-PEG 1100 (Markenbezeichnung Polyglykol A 1100, Clariant, DE) und Vinyl-PEG 1100 (Markenbezeichnung Polyglykol R 1100; Clariant, DE) eingesetzt.

**Tabelle 1: Übersicht Polymere P-1 bis P-8; m = Molanteil kationisches Monomer, n = Molanteil Seitenkette, o = Molanteil Acrylsäure**

| **Bsp.** | **Pol.** | **Mol%** | **Vorlage (g)** | **Zulauf (g)** | **Zulaufzeit** |
|---|---|---|---|---|---|
| **1** | P-1 | m = 50 | 240.0 g T-PEG 2400 | 27.7 g TMAEMC, | 15 min |
| | | n = 50 | 2.0 g Fe(II)-SO₄*7H₂O | 3.1 g H₂O₂, | |
| | | o = 0 | 2.0 g Regler | 1.7 g NHMS | |
| **2** | P-2 | m = 75 | 120 g T-PEG 2400 | 27.7 g TMAEMC | 20 min |
| | | n = 25 | 2.0 g Fe(II)-SO₄*7H₂O | 1.3 g H₂O₂ | |
| | | o = 0 | 2.1 g Regler, 125 g H₂O | 0.8 g NHMS | |
| **3** | P-3 | m = 25 | 240 g T-PEG 2400 | 27.7 g TMAEMC | 20 min |
| | | n = 25 | 2.0 g Fe(II)-SO₄*7H₂O | 14.6 g Acrylsäure | |
| | | o = 50 | 2.0 g Regler, 200 g H₂O | 2.7 g H₂O₂, 1.2 g NHMS | |
| **4** | P-4 | m = 33 | 240 g T-PEG 2400 | 27.7 g TMAEMC | 15 min |
| | | n = 33 | 2.0 g Fe(II)-SO₄*7H₂O | 7.2 g Acrylsäure | |
| | | o = 33 | 2.0 g Regler, 200 g H2O | 2.3 g H₂O₂, 1.7 g NHMS | |
| **5** | P-5 | m = 40 | 240 g T-PEG 2400, | 27.7.1 g TMAEMC | 20 min |
| | | n = 40 | 2.0 g Fe(II)-SO₄*7H₂O, | 3.6 g Acrylsäure | |
| | | o = 20 | 2.0 g Regler, 200 g H₂O | 2.3 g H₂O₂, 1.7 g NHMS | |
| **6** | P-6 | m = 50 | 110 g Allyl-PEG 1100, | 41.5 g TMAEMC | 15 min |
| | | n = 50 | 0.3 g Fe(II)-SO₄*7H₂O, | 5 g H₂O₂ | |
| | | o = 0 | 280 g H2O | 2 g NHMS | |
| **7** | P-7 | m = 20 | 60 g Vinyl-PEG 5800, | 2.8 g TMAEMC | 10 min |
| | | n = 20 | 0.2 g Fe(II)-SO₄*7H₂O, | 2.2 g Acrylsäure | |
| | | o = 60 | 0.2 g Regler | 0.3 g H₂O₂ 0.3 g NHMS | |
| **8** | P-8 | m = 50 | 110 g Vinyl-PEG 1100, | 41.5 g TMAEMC | 15 min |
| | | n = 50 | 0.3 g Fe(II)-SO₄*7H₂O, | 5 g H₂O₂ | |
| | | o = 0 | 0.7 g Regler, 280 g H₂O | 2 g NHMS | |

### Beispiele 9 bis 19: Herstellung von abbindbaren Gipszusammensetzungen und Charakterisierung des Fliessverhaltens

Die Ausbreitmasse (ABM), der Versteifungsbeginn (VB) und das Versteifungsende (VE) von Gipsslurrys (Gipsschlammkuchen) wurden wie folgt bestimmt. Zunächst wurden 140 g Wasser mit dem Kammpolymer (Verflüssiger) und dem Additiv versetzt. Dabei wurde die Menge an Kammpolymer oder Verflüssiger vorher im Hinblick auf die Menge Calciumsulfat eingestellt. Bei den Vergleichsversuchen wurden entsprechend Zusätze und/oder Kammpolymer weggelassen. Dann wurden 200 g Calciumsulfat-β-Halbhydrat und 0.2 g Calciumsulfat-Dihydrat innerhalb von 15 Sekunden in das Wasser eingestreut und der Gipsslurry 15 Sekunden sumpfen gelassen. Anschliessend wurde 30 Sekunden von Hand intensiv gerührt. Der Minikonus mit einem Durchmesser von 50 mm und einer Höhe von 51 mm wurde gefüllt und nach 75 Sekunden das Ausbreitmass (ABM) in Millimeter bestimmt. Der Durchmesser des sich bildenden Gipskuchens wurde gemessen, sobald kein Fließen mehr beobachtet wurde. Der Durchmesser in mm wurde als Ausbreitmasse bezeichnet. Der Versteifungsbeginn und das Versteifungsende wurden mit der Messerschnittmethode nach DIN EN 13279-2 und der Daumendruckmethode bestimmt. Der Versteifungsbeginn (VB) ist erreicht, wenn nach einem Messerschnitt durch den Gips-Kuchen die Schnittränder nicht mehr zusammenlaufen. Das Versteifungsende (VE) ist eingetreten, wenn bei einem Fingerdruck mit einem Druckaufwand von ca. 5 kg kein Wasser mehr aus dem Gips-Kuchen austritt. Um den Tongehalt genau und reproduzierbar einzustellen, wurde reines Calciumsulfat mit einer eingestellten Menge Ton versetzt. Es wurde ein Calciumsulfat-β-Halbhydrat zusammen mit Calciumsulfat-Dihydrat als Gips eingesetzt und Bentonit (Sigma-Aldrich Chemie GmbH, Schweiz) hinzugefügt.

Die Versuchsbedingungen und die Ergebnisse sind in Tabelle 2 zusammengefasst. Nicht erfinderische Beispiele sind als "V" (Vergleich) kategorisiert. Zum Vergleich und zur Erprobung von Kombinationen wurden übliche Polycarboxylatether ohne kationische Seitenketten ("PCE"; Markenbezeichnung Sika ViscoCrete G2; Firma Sika, CH) eingesetzt. Das Ergebnis ist auch grafisch in Figur 1 dargestellt. Die Beispiele zeigen, dass die Fließfähigkeit tonhaltiger Gipse durch Zusatz der erfindungsgemäßen Kammpolymere deutlich erhöht werden kann. Zudem kann der Versteifungsbeginn deutlich verzögert werden.

**Tabelle 2: Zusammenfassung der Versuchsbedingungen und Ergebnisse**

| **Beispiel** | **Typ** | **Bentonit** | **β-Halbhydrat** | **nicht kationisches Polymer** | | **kationisches Polymer** | | **ABM [mm]** | **VB [min:s]** | **VE [min:s]** |
|---|---|---|---|---|---|---|---|---|---|---|
| | | **%** | **%** | **Name** | **Dos. %** | | **Dos. %** | | | |
| **9** | V | 0,0% | 100,0% | - | 0,00 | | 0,00 | 180 | 02:50 | 06:50 |
| **10** | V | 0,0% | 100,0% | **PCE** | 0,20 | | 0,00 | 206 | 04:40 | 12:40 |
| **11** | V | 1,0% | 99,0% | **PCE** | 0,20 | | 0,00 | 143 | 02:50 | 09:05 |
| **12** | | 1,0% | 99,0% | **PCE** | 0,20 | **P-1** | 0,20 | 169 | 03:20 | 09:35 |
| **13** | | 1,0% | 99,0% | **PCE** | 0,20 | **P-2** | 0,20 | 185 | 04:00 | 09:50 |
| **14** | | 1,0% | 99,0% | **PCE** | 0,20 | **P-3** | 0,20 | 198 | 04:00 | 10:40 |
| **15** | | 1,0% | 99,0% | **PCE** | 0,20 | **P-4** | 0,20 | 186 | 04:00 | 09:55 |
| **16** | | 1,0% | 99,0% | **PCE** | 0,20 | **P-5** | 0,20 | 176 | 03:55 | 09:45 |
| **17** | | 1,0% | 99,0% | **PCE** | 0,20 | **P-6** | 0,20 | 183 | 04:50 | 11:27 |
| **18** | | 1,0% | 99,0% | **PCE** | 0,20 | **P-7** | 0,20 | 171 | 03:30 | 10:30 |
| **19** | | 1,0% | 99,0% | **PCE** | 0,20 | **P-8** | 0,20 | 173 | 04:05 | 11:58 |

## Patentansprüche

1. Kammpolymer, erhältlich durch Polymerisieren eines Monomerengemischs, das mindestens ein Monomer enthält, das mindestens eine kovalent an das Monomer gebundene kationische Gruppe aufweist, und das mindestens ein Monomer der Formel
R¹-O-[AO]ₙ-R²
enthält, wobei
R¹ eine Alkenylgruppe ist,
R² für H, eine Alkylgruppe mit 1 bis 20 C-Atomen, oder eine Arylgruppe oder Alkylarylgruppe mit 7 bis 20 C-Atomen steht,
A unabhängig voneinander für eine C₂- bis C₆-Alkylengruppe steht, wobei A nicht eine unverzweigte Alkylengruppe mit vier oder mehr C-Atomen ist,
und n ein Wert von 2 bis 300 ist.

2. Kammpolymer gemäß Anspruch 1, wobei die mindestens eine kationische Gruppe eine quartäre Ammoniumgruppe ist.

3. Kammpolymer gemäß mindestens einem der vorhergehenden Ansprüche, wobei die kationische Gruppe die Formel -N⁺R¹⁰R¹¹R¹² aufweist, wobei R¹⁰, R¹¹ und R¹² unabhängig voneinander H, ein aliphatischer Kohlenwasserstoffrest mit 1 bis 20 C-Atomen, ein cycloaliphatischer Kohlenwasserstoffrest mit 5 bis 8 C-Atomen und/oder ein Arylrest mit 6 bis 14 C-Atomen ist.

4. Kammpolymer gemäß mindestens einem der vorhergehenden Ansprüche, wobei das Monomer, das mindestens eine kationische Gruppe aufweist, ausgewählt ist aus [2-(Acryloyloxy)-ethyl]-trimethyl-ammoniumchlorid, [2-(Acryloylamino)-ethyl]-trimethyl-ammoniumchlorid, [2-(Acryloyloxy)-ethyl]-trimethyl-ammoniummethosulfat, [2-(Methacryloyloxy)-ethyl]-trimethylammoniumchlorid bzw. -methosulfat, [3-(Acryloylamino)-propyl]-trimethylammoniumchlorid, [3-(Methacryloylamino)-propyl]-trimethylammoniumchlorid und Diallyldimethylammoniumchlorid (DADMAC).

5. Kammpolymer gemäß mindestens einem der vorhergehenden Ansprüche, wobei das Monomer der Formel R¹-O-[AO]ₙ-R² ein Isoprenylpolyethylenglykol, Allylpolyethylenglykol oder Vinylpolyethylenglykol ist, wobei der Rest R² gleich H oder eine C₁ bis C₆ Alkylgruppe ist.

6. Kammpolymer gemäß mindestens einem der vorhergehenden Ansprüche, wobei das Kammpolymer Carboxygruppen aufweist.

7. Kammpolymer gemäß mindestens einem der vorhergehenden Ansprüche, umfassend
a) mindestens eine Struktureinheit **A,** die bevorzugt die Formel (I) aufweist: 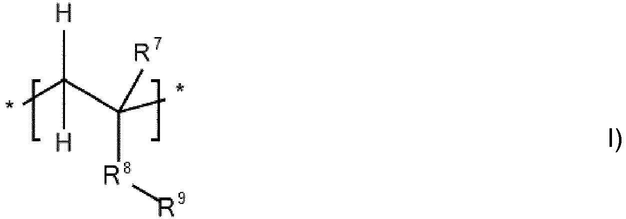 wobei
R⁷ unabhängig voneinander für H oder CH₃ steht,
R⁸ unabhängig voneinander für -CO-O-R'-, -NH-R'-, -CO-NH-R'-, -O-, R', -O-R'- oder -R'-O-R'- steht, wobei R' eine C₁ bis C₂₀ Alkylengruppe ist, die verzweigt oder unverzweigt sein kann, insbesondere eine Methylen-, Ethylen- oder Propylengruppe, und
R⁹ unabhängig voneinander für eine kationische Gruppe steht.
b) mindestens einer Struktureinheit **B** der Formel (II); 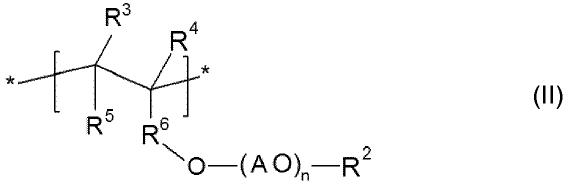 wobei
R² für H, eine Alkylgruppe mit 1 bis 20 C-Atomen, oder eine Arylgruppe oder Alkylarylgruppe mit 7 bis 20 C-Atomen steht,
A unabhängig voneinander für eine C₂ - C₆ Alkylengruppe, insbesondere für eine Ethylen- oder Propylengruppe steht, wobei A nicht eine unverzweigte Alkylengruppe mit 4 oder mehr C-Atomen ist,
R³, R⁴ und R⁵ unabhängig voneinander ausgewählte aus H und Alkylresten mit 1 bis 20 C-Atomen, die linear, verzweigt oder zyklisch sein können,
R⁶ eine C₁ - C₆ Alkylengruppe ist, insbesondere Methylen,
n unabhängig voneinander ein Wert zwischen 2 und 300 ist,
c) gegebenenfalls eine Struktureinheit **C** der Formel (III): 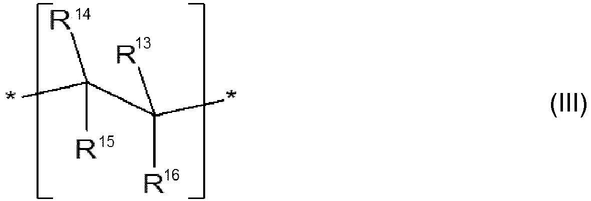
wobei jedes R¹³, R¹⁴ und R¹⁵ unabhängig voneinander für H, -COOM, -CH₂COOM oder eine Alkylgruppe mit 1 bis 5 Kohlenstoffatomen steht,
R¹⁶ unabhängig voneinander für -COOM, -CH₂COOM, -SO₂-OM, -O-PO(OM)₂ und/oder -PO(OM)₂ steht,
oder wobei R¹⁵ mit R¹⁶ einen Ring bildet zu -CO-O-CO-,
wobei M für H, ein Alkalimetall, ein Erdalkalimetall, Ammonium, ein Ammoniumkation, eine organische Ammoniumverbindung oder Mischungen davon steht;
mit der Maßgabe, dass insgesamt ein einziger oder zwei der Reste R¹³, R¹⁴, R¹⁵ und R¹⁶ Säuregruppen sind,
wobei die Struktureinheit **C** bevorzugt eine Acrylsäureeinheit oder ein Salz davon und/oder eine Methacrylsäureeinheit oder ein Salz davon ist.

8. Kammpolymer gemäß Anspruch 7, wobei die mindestens eine Struktureinheit **B** die Formel (IIa) aufweist: 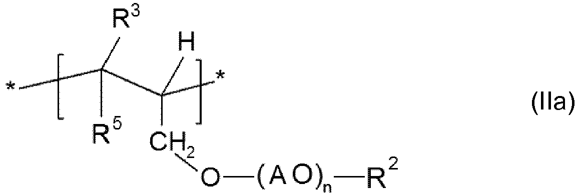 wobei
R² gleich H oder ein Alkylrest mit 1 bis 6 C-Atomen ist,
A unabhängig voneinander für eine Ethylen- oder Propylengruppe steht,
R³ und R⁵ unabhängig voneinander ausgewählt sind aus H und Alkylresten, die linear oder verzweigt sein können, die 1 bis 6 C-Atome aufweisen, und die insbesondere Methyl oder Ethyl sind, und
n unabhängig voneinander ein Wert zwischen 5 und 200 ist.

9. Kammpolymer gemäß mindestens einem Ansprüche 7 oder 8, wobei das Kammpolymer 5 bis 95 Mol-% Struktureinheiten **A,** 5 bis 95 Mol-% Struktureinheiten **B** und 0 bis 90 Mol-% Struktureinheiten **C** aufweist, jeweils bezogen auf die Gesamtzahl aller monomerer Struktureinheiten in der Hauptkette des Kammpolymers. wobei die Summe der monomeren Struktureinheiten **A, B** und **C** 100 Mol-% ist.

10. Hydraulisch abbindbare Zusammensetzung, enthaltend ein Kammpolymer gemäß mindestens einem der vorhergehenden Ansprüche und ein hydraulisch abbindbares Bindemittel, das bevorzugt Gips oder Zement ist.

11. Hydraulisch abbindbare Zusammensetzung gemäß Anspruch 10, die zusätzlich Ton enthält.

12. Hydraulisch abbindbare Zusammensetzung gemäß mindestens einem der Ansprüche 10 bis 11, die zusätzlich mindestens einen Polycarboxylatether ohne kationische Gruppen enthält.

13. Verwendung eines Kammpolymers gemäß mindestens einem der Ansprüche 1 bis 9 als Dispergiermittel für hydraulisch abbindbare Zusammensetzungen.

14. Verfahren zur Herstellung eines Kammpolymers gemäß mindestens einem der Ansprüche 1 bis 9, umfassend die Schritte:
(A) Bereitstellen eines Monomerengemischs gemäß Anspruch 1, und
(B) Polymerisieren des Monomerengemischs unter Erhalt des Kammpolymers.

## Claims

1. A comb polymer obtainable by polymerizing a monomer mixture, which contains at least one monomer having at least one cationic group covalently bonded to the monomer and which contains at least one monomer of the formula
R¹-O-[AO]ₙ-R²,
wherein
R¹ is an alkenyl group,
R² represents H, an alkyl group having 1 to 20 C atoms, or an aryl group or alkylaryl group having 7 to 20 C atoms,
A independently of one another represents a C₂ to C₆ alkylene group, wherein A is not an unbranched alkylene group having 4 or more C atoms,
and n is a value from 2 to 300.

2. The comb polymer of claim 1, wherein said at least one cationic group is a quaternary ammonium group.

3. The comb polymer according to at least one of the preceding claims, wherein the cationic group has the formula -N⁺R¹⁰R¹¹R¹², wherein R¹⁰, R¹¹ and R¹² independently of one another are H, an aliphatic hydrocarbon radical having 1 to 20 C atoms, a cycloaliphatic hydrocarbon radical having 5 to 8 C atoms and/or an aryl group having 6 to 14 C-atoms.

4. The comb polymer according to at least one of the preceding claims, wherein the monomer having at least one cationic group is selected from [2-(acryloyloxy)-ethyl] trimethylammonium chloride, [2-(acryloylamino)-ethyl] trimethylammonium chloride, 2-(acryloyloxy)-ethyl] trimethylammoniummethosulfate, [2-(methacryloyloxy)-ethyl] trimethylammonium chloride or methosulfate, [3-(acryloylamino)-propyl] trimethylammonium chloride, [3-(methacryloylamino)-propyl] trimethylammonium chloride and diallyldimethylammonium chloride (DADMAC).

5. The comb polymer according to at least one of the preceding claims, wherein the monomer of the formula R¹-O-[AO]ₙ-R² is an isoprenyl polyethylene glycol, allyl polyethylene glycol or vinyl polyethylene glycol, wherein radical R² is H or a C₁ to C₆ alkyl group.

6. The comb polymer according to at least one of the preceding claims, wherein the comb polymer has carboxyl groups.

7. The comb polymer according to at least one of the preceding claims, comprising
a) at least one structural unit **A,** which preferably has formula (I) 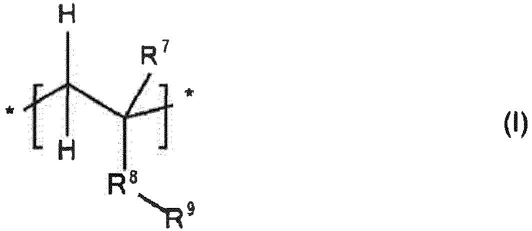 wherein
R⁷ independently of one another represents H or CH₃,
R⁸ independently of one another represents -CO-OR'-, -NH-R'-, -CO-NH-R'-, -O-, R', -O-R'- or -R'-O-R', wherein R' is a C₁ to C₂₀ alkylene group which may be branched or unbranched, in particular a methylene, ethylene or propylene group, and
R⁹ independently of one another represents a cationic group;
b) at least one structural unit **B** of formula (II): 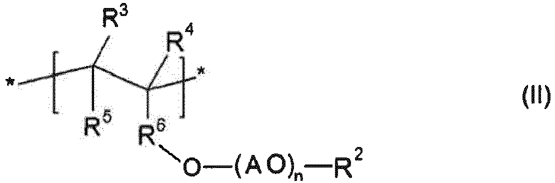 wherein
R² represents an H, an alkyl group having 1 to 20 C atoms, or an aryl or alkylaryl group having 7 to 20 C atoms,
A independently of one another represents a C₂ to C₆ alkylene group, in particular an ethylene or propylene group, wherein A is not an unbranched alkylene group having 4 or more C atoms,
R³, R⁴ and R⁵ are independently of one another selected from H and alkyl radicals having 1 to 20 C atoms, which may be linear, branched or cyclic
R⁶ is a C₁ - C₆ alkylene group, in particular methylene,
n independently of one another is a value between 2 and 300.
c) optionally a structural unit **C** of formula (III): 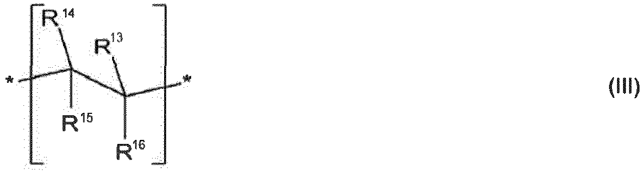
wherein each R¹³, R¹⁴ and R¹⁵ independently of one another represents H, -COOM, -CH₂COOM or an alkyl group having 1 to 5 carbon atoms,
R¹⁶ independently of one another represents -COOM, -CH₂COOM, - SO₂-OM, -O-RO(OM)₂ and/or -PO(OM)₂,
or wherein R¹⁵ and R¹⁶ form a ring -CO-O-CO-,
wherein M represents H, an alkali metal, an alkaline earth metal, ammonium, an ammonium cation, an organic ammonium compound or mixtures thereof;
with the proviso that overall a single or two of the radicals R¹³, R¹⁴, R¹⁵ and R¹⁶ are acid groups,
wherein the structural unit **C** preferably is an acrylic acid unit or a salt thereof and/or a methacrylic acid or a salt thereof.

8. The comb polymer according to claim 7, wherein the at least one structural unit **B** has formula (IIa): 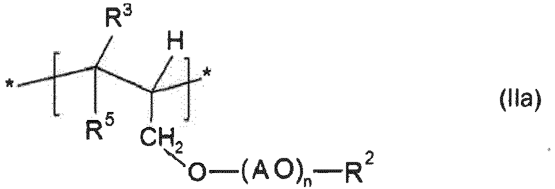 wherein
R² is H or an alkyl group having 1 to 6 C atoms,
A independently of one another represents an ethylene or propylene group,
R³ and R⁵ independently of one another are selected from H and alkyl radicals, which may be linear or branched, having from 1 to 6 C atoms and which are in particular methyl or ethyl, and
n independently of one another is a value between 5 and 200.

9. The comb polymer according to at least one of claims 7 or 8, wherein the comb polymer has 5 to 95 mol% structural units **A,** 5 to 95 mol% structural units **B** and 0 to 90 mol% structural units **C,** based in each case on the total number of all monomeric structural units in the main chain of the comb polymer, wherein the sum of the monomeric structural units **A, B** and **C** is 100 mol%.

10. A hydraulically setting composition containing a comb polymer according to at least one of the preceding claims and a hydraulically setting binder which preferably is gypsum or cement.

11. The hydraulically setting composition according to claim 10, which additionally contains clay.

12. The hydraulically setting composition according to at least one of claims 10 to 11, which additionally contains at least one polycarboxylate ether having no cationic groups.

13. Use of a comb polymer according to at least one of claims 1 to 9 as a dispersing agent for hydraulically setting compositions.

14. A process for producing a comb polymer according to at least one of claims 1 to 9, comprising the steps of:
(A) providing a monomer mixture according to claim 1, and
(B) polymerizing the monomer mixture to give the comb polymer.

## Revendications

1. Polymère en peigne, pouvant être obtenu par polymérisation d'un mélange de monomères qui contient au moins un monomère qui comporte au moins un groupe cationique covalent lié au monomère, et qui contient au moins un monomère de formule
R¹-O-[AO]ₙ-R²,
dans laquelle
R¹ est un groupe alcényle,
R² représente H, un groupe alkyle ayant de 1 à 20 atomes de carbone ou un groupe aryle ou alkylaryle ayant de 7 à 20 atomes de carbone,
A représente chaque fois indépendamment un groupe alkylène en C₂-C₆, A ne représentant pas un groupe alkylène non ramifié ayant quatre ou plus de quatre atomes de carbone,
et n a une valeur de 2 à 300.

2. Polymère en peigne selon la revendication 1, dans lequel ledit au moins un groupe cationique est un groupe ammonium quaternaire.

3. Polymère en peigne selon au moins l'une quelconque des revendications précédentes, dans lequel le groupe cationique présente la formule -N⁺R¹⁰R¹¹R¹², dans laquelle R¹⁰, R¹¹ et R¹² représentent chacun indépendamment H, un radical hydrocarboné aliphatique ayant de 1 à 20 atomes de carbone, un radical hydrocarboné cycloaliphatique ayant de 5 à 8 atomes de carbone et/ou un radical aryle ayant de 6 à 14 atomes de carbone.

4. Polymère en peigne selon au moins l'une quelconque des revendications précédentes, dans lequel le monomère qui comporte au moins un groupe cationique est chois parmi le chlorure de [2-(acryloyloxy)-éthyl]triméthyl-ammonium, le chlorure de [2-(acryloyl-amino)-éthyl]triméthyl-ammonium, le méthosulfate de [2-(acryloyloxy)-éthyl]triméthyl-ammonium, le chlorure ou méthosulfate de [2-(méthacryloyloxy)-éthyl]triméthyl-ammonium, le chlorure de [3-(acryloylamino)-propyl]-triméthylammonium, le chlorure de [3-(méthacryloyl-amino)-propyl]triméthylammonium et le chlorure de diallyldiméthylammonium (DADMAC).

5. Polymère en peigne selon au moins l'une quelconque des revendications précédentes, dans lequel le monomère de formule R¹-O-[AO]ₙ-R² est un isoprényl-polyéthylèneglycol, allylpolyéthylèneglycol ou vinyl-polyéthylèneglycol, le radical R² représentant H ou un groupe alkyle en C₁ à C₆.

6. Polymère en peigne selon au moins l'une quelconque des revendications précédentes, le polymère en peigne comportant des groupes carboxy.

7. Polymère en peigne selon au moins l'une quelconque des revendications précédentes, comprenant
a) au moins un motif structural **A** qui présente de préférence la formule (I) : 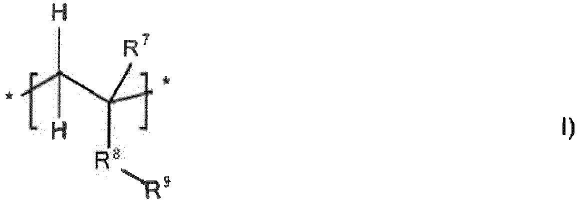 dans laquelle
R⁷ représente chaque fois indépendamment H ou CH₃,
R⁸ représente chaque fois indépendamment -CO-O-R'-, -NH-R'-, -CO-NH-R'-, -O-, R', -O-R'- ou -R'-O-R'-, R' étant un groupe alkylène en C₁-C₂₀ qui peut être ramifié ou non ramifié, en particulier un groupe méthylène, éthylène ou propylène, et
R⁹ représente chaque fois indépendamment un groupe cationique.
b) au moins un motif structural **B** de formule (II) : 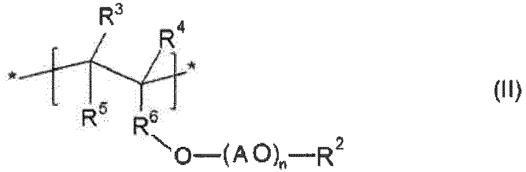 dans laquelle
R² représente H, un groupe alkyle ayant de 1 à 20 atomes de carbone ou un groupe aryle ou alkylaryle ayant de 7 à 20 atomes de carbone,
A représente chaque fois indépendamment, un groupe alkylène en C₂-C₆, en particulier un groupe éthylène ou propylène, A n'étant pas un groupe alkylène non ramifié ayant 4 ou plus de 4 atomes de carbone,
R³, R⁴ et R⁵ sont choisis chacun indépendamment parmi H et des radicaux alkyle ayant de 1 à 20 atomes de carbone, qui peuvent être linéaires, ramifiés ou cycliques,
R⁶ est un groupe alkylène en C₁-C₆, en particulier méthylène,
n a chaque fois indépendamment une valeur comprise entre 2 et 300,
c) éventuellement un motif structural **C** de formule (III) : 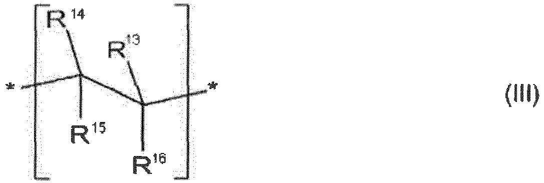
dans laquelle chacun des radicaux R¹³, R¹⁴ et R¹⁵ représente chaque fois indépendamment H, -COOM, -CH₂COOM ou un groupe alkyle ayant de 1 à 5 atomes de carbone,
R¹⁶ représente chaque fois indépendamment -COOM, -CH₂COOM, -SO₂-OM, -O-PO(OM)₂ et/ou -PO(OM)₂,
ou dans laquelle R¹⁵ forme avec R¹⁶ un cycle fermé en -CO-O-CO- ;
M représentant H, un atome de métal alcalin, un atome de métal alcalino-terreux, un groupe ammonium, un cation ammonium, un composé organique d'ammonium ou des mélanges de ceux-ci ;
étant entendu qu'au total un seul ou deux des radicaux R¹³, R¹⁴, R¹⁵ et R¹⁶ sont des groupes acides,
le motif structural **C** étant de préférence une unité acide acrylique ou un sel de cet acide et/ou une unité acide méthacrylique ou un sel de cet acide.

8. Polymère en peigne selon la revendication 7, dans lequel ledit au moins un motif structural **B** présente la formule (IIa) : 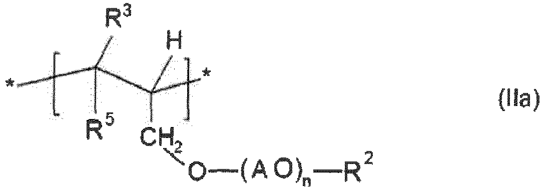 dans laquelle
R² représente H ou un radical alkyle ayant de 1 à 6 atomes de carbone,
A représente chaque fois indépendamment un groupe éthylène ou propylène,
R³ et R⁵ sont choisis indépendamment l'un de l'autre parmi H et des radicaux alkyle qui peuvent être linéaires ou ramifiés, qui comportent de 1 à 6 atomes de carbone et qui sont en particulier des groupes méthyle ou éthyle, et
n a chaque fois indépendamment une valeur comprise entre 5 et 200.

9. Polymère en peigne selon au moins l'une quelconque des revendications 7 et 8, le polymère en peigne comportant 5 à 95 % en moles de motifs structuraux **A,** 5 à 95 % en moles de motifs structuraux **B** et 0 à 90 % en moles de motifs structuraux **C,** chaque fois par rapport au nombre total de tous les motifs structuraux monomères dans la chaîne principale du polymère en peigne, la somme des motifs structuraux monomères **A, B** et **C** étant égale à 100 % en moles.

10. Composition durcissable par prise hydraulique, contenant un polymère en peigne selon au moins l'une quelconque des revendications précédentes et un liant durcissable par prise hydraulique, qui est de préférence le plâtre ou le ciment.

11. Composition durcissable par prise hydraulique selon la revendication 10, qui contient en outre de l'argile.

12. Composition durcissable par prise hydraulique selon au moins l'une quelconque des revendications 10 et 11, qui contient en outre au moins un éther de polycarboxylate sans groupes cationiques.

13. Utilisation d'un polymère en peigne selon au moins l'une quelconque des revendications 1 à 9, en tant que dispersant pour des compositions durcissables par prise hydraulique.

14. Procédé pour la préparation d'un polymère en peigne zwitterionique selon au moins l'une quelconque des revendications 1 à 9, comprenant les étapes :
(A) disposition d'un mélange de monomères selon la revendication 1, et
(B) polymérisation du mélange de monomères, avec obtention du polymère en peigne.
